# EUROPEAN PATENT APPLICATION

(11) **EP 1 526 290 A1**
(43) Date of publication of application: **27.04.2005**
(21) Application number: 03024421.4
(22) Date of filing: 23.10.2003
(51) Int. Cl.: F15C 5/00, B81B 1/00, B01L 3/00

(54) **Microchannel with a non-closing valve**

(71) Applicant: F. Hoffmann-La Roche AG, 4070 Basel (CH); Roche Diagnostics GmbH, 68305 Mannheim (DE)
(72) Inventor: Griss, Patrick, Dr., 8004 Zürich (CH)
(74) Representative: Hörschler, Wolfram Johannes, Dipl.-Ing.

(57) **Abstract**

The invention relates to a substrate with at least two microchannels (3, 5) of which at least one microchannel (3, 5) is formed on one side of the substrate (25) and at least one microchannel (3, 5) is formed on the opposite side of the substrate. The two microchannels (3, 5) are positioned on either side of the substrate (25) and form an intersection area with an intersection edge (15) which acts as a non-closing valve (1).

## Description

### Field of the invention

The invention relates to a non-closing valve for use within microfluidic structures. Liquid flow within micro scale channels is controlled by surface tension forces which are developed within these microscale channels. The liquid flow can be halted depending on the wall surface properties and/or wall geometry until fluid force reaches a predetermined pressure to allow the channel to open.

### Background of the Invention

Non-closing valves are used in microfluidic systems. Herein the term non-closing valves refers to valves in which a liquid is stopped at a specific location of a microchannel even if the microchannel at the valve position is open, i.e. not obstructed by physical means. The fabrication of non-closing valves is often easier than closing valves since they do not contain moving parts. US 2002/0003001 A1 discloses a non-closing valve for use within microfluidic structures. Surface tension forces developed within microscale channels are used to control flow within the channels. Flow can be halted within a channel until fluid force reaches a predetermined pressure to allow the channel to open.

US 2003/0053934 A1 refers to a microfluidic device which comprises two or more microchannel structures. Within the microchannel structures non-closing valves are incorporated. The non-closing valves are based on a change in chemical surface characteristics, which may be combined with changes in geometric surface characteristics. The changes in geometric surface characteristics are realized by a step-like increase of the width of the channel.

Microvalves for controlling liquid flow from microreservoirs into transfer channels using capillary valving mechanisms are disclosed in WO 98/07019. Liquids which completely or partially wet the material of the microchannels which contain them experience a resistance to flow when moving from a microchannel of narrow cross-section to one of larger cross-section, while those liquids which do not wet these materials resist flowing from microchannels of large cross-section to those with a smaller cross-section. The details of the cross-sectional shape are not important. By varying the intersection shapes, materials and cross-sectional areas, microvalves are fashioned that require the application of a particular pressure on the liquid to induce liquid flow.

The non-closing valves described in US 2002/0003001 A1, US 2003/0053934 A1 and WO 98/07019 rely on planar fabrication techniques. Thus the specific curvature or geometry required that the channel acts as a non-closing valve is defined by the top view geometry of the channel. This geometry is defined in a drawing - most commonly in a CAD file - and transferred to the channel structure. Since non-closing valves often contain sharp edges, it may be difficult to transfer the valve geometry due to fabrication related reasons, e.g. when using polymer replication techniques.

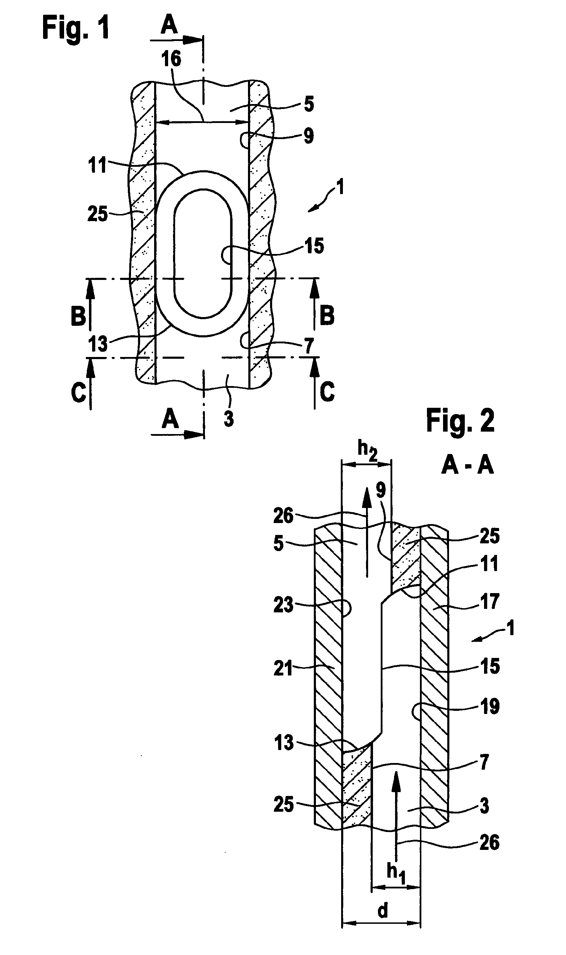

From the publication "Fabrication and characterization of stop flow valves for fluid handling", G. Egidi, F. Herrera, M.C. Moreno-Bondi, M. Kempe, J.A. van Rhijn, G.C. Fiaccabrino and N.F. de Rooij, Transducers '03, The 12^{th} International Conference on Solid State Sensors, Actuators and Microsystems, Boston, June 8-12, 2003, pages 147 - 150, stop flow valves are known. Monolithic stop flow valves produced by Deep Reactive Ion Etching (DRIE) are proposed for the handling and the processing of small metered fluid volumes in capillary channels. As 2 µl sampling unit has been successfully integrated as an element of a miniaturized chemical analysis system to improve analyses reproducibility. The net pressure needed to overcome the stop flow valve was determined experimentally for different valve diameters and compared to theoretical values. A 60 µm diameter valve diameter can typically withstand a water pressure head of 20 cm, which is largely sufficient for most applications. Sampling of 2 *µ*l of selection of solvents was successfully demonstrated. According to figure 1 of the above-referenced publication a schematic drawing for two stop flow valves placed in series as disclosed. The perpendicular interconnection channels expand into the larger section of the storage volume. Because of the symmetry of the design the stop flow valve can be used in either direction.

### Summary of the Invention

The present invention relates to a non-closing valve, which is not mainly defined in a drawing and transferred to the microfluidic system but results from inherent process characteristics of etching of planar substrates. The geometry transferred onto the substrate basically includes a channel with a dead end. If two channels are aligned and etched on opposite sides of the substrate, the area where the two channels overlap acts as non-closing valve because of the inherent geometrical properties of the overlap.

Another possibility to create a non-closing valve is to cross or intersect two channels formed on either side of the substrate. The advantage of this embodiment is that alignment is allowed to be less precise and that the liquid stopped will be distributed in a plurality of channels. If two microchannels are crossed, liquid flow can be established in four channels; if one channel intersect with another channel a liquid flow in three microchannels is established and if one microchannel arranged above the other microchannels in their respective end portions, liquid flow can be controlled in two channels which may adopt a straight or a curved orientation.

The present invention relates to a substrate with at least two microchannels of which at least one microchannel is formed on one side of the substrate and at least one microchannel is formed on the opposite side of the substrate. The two microchannels positioned on either side of the substrate form an intersection area with an intersection edge, which acts as a non-closing valve. Preferably, the microchannels have an approximately semi-circular shaped cross-section. The advantage of the semi-circular shaped cross-section is that at the intersection area a sharp intersection edge is formed. At the sharp intersection edge the liquid will come to a halt because of the geometry of the intersection. In order to overrun the valve the liquid pressure is increased (for example by means of an external pump) and the liquid will continue to flow through the microchannel. Another advantage of the present invention is that because of the sharp intersection edge different surface properties of the channel walls are not necessary. A localized hydrophobic stopper for the liquid is not needed, since according to the solution of the present invention the liquid flow is stopped by geometry only. The system liquid/surface of microchannel creates a contact angle of less than 90° allowing for liquid transfer without input of external energy sources. However, if covers are applied to the respective microchannels, the contact angle between said cover material and the liquid may adopt contact angles either < 90° or ≥ 90°.

The non-closing valve comprising at least one microchannel on either side of the substrate can be manufactured with any micromachining method which allows to create channels with an approximately semi-circular cross-section. The cross-section of the microchannels on either side of the substrate may also be trapezoidal or rectangular. Preferentially, a wet etching of metal foils or plasma etching of thin polymeric foils is used to fabricate the non-closing valve according to the present invention. Additionally the non-closing valve can also be fabricated by micro eroding or micro metal-cutting processes. The metal foils may have a thickness of about 25 *µ*m to 1000 *µ*m; instead of metal foils polyimide-foils of a thickness between 10 *µ*m - 1000 *µ*m, LCP (liquid crystal polymer)-foils, having a thickness of 10 *µ*m - 1000 *µ*m; glass and pyrex® having a thickness between 100 *µ*m and 1000 *µ*m, silicon substrates with a thickness between 25 *µ*m and 2000 *µ*m may be used, further materials having a plane and etchable surface.

To get microchannels on each side of a substrate and having only one inlet and one outlet, the microchannels might be closed by a cover which is positioned on either side of the substrate. Thus, the non-closing valves according to the present invention can be arranged in both, i.e. opened and closed microchannels.

### Brief Description of the Drawings

The invention will now be more particularly described with reference to the drawings.
- Figure 1: shows a sectional view of a microchannel with inventive non-closing valve,
- Figure 2: shows a sectional view of an inventive non-closing valve along the line which is marked with A-A in figure 1,
- Figure 3: shows a sectional view of an inventive non-closing valve along the line which is marked with B-B in figure 1,
- Figure 4: shows a sectional view of an inventive non-closing valve along the line which is marked with C-C in figure 1,
- Figure 5: shows a sectional view of an inventive non-closing valve along the line which is marked with A-A in figure 1 with liquid stopping at the intersection edge,
- Figure 6: shows a sectional view of two crossing microchannels with liquid stopping at the intersection edge,
- Figure 7: shows a sectional view of an inventive non-closing valve along the line which is marked with A-A in figure 6,
- Figure 8: shows a sectional view of an inventive non-closing valve along the line which is marked with B-B in figure 6,
- Figure 9: shows an inventive non-closing valve with one microchannel crossing another and ending at the intersection area and
- Figures 10.1 - 10.5: various filling stages of a flow splitter device having a plurality of non-closing valves.

### Description of the Preferred Embodiments

Figure 1 shows a sectional view of two aligned microchannels forming an non-closing valve according to the present invention.

A non-closing valve as shown in figure 1 comprises a first microchannel 3 and a second microchannel 5. The first microchannel 3 and the second microchannel 5 are formed on either side of a flat substrate 25. Materials for the respective substrates are - to give examples - very thin machined steel foils, having a thickness within the range from about 25 µm to 1000 µm. Further, polymeric materials, having a thickness within the range 10 µm to 1000 µm can be used such as polyimide-foils or liquid crystal polymer foils (LCP) can be used. Further materials to be used as substrates are glass and pyrex® within a thickness range between 100 µm and 1000 µm. It is en-visagable to use silicon-substrates the thickness of which is within a range from 25 *µm* and 2000 µm and materials, plane surfaces of which are etchable.

To form a non-closing valve 1 the first microchannel 3 and the second microchannel 5 have to be aligned and overlap. At the intersection area 6 where the first microchannel 3 and the second microchannel 5 overlap, the non-closing valve 1 is formed. At the intersection area 6 the first microchannel 3 ends in a first border 11 and the second microchannel 5 ends in a second border 13. Since the first microchannel 3 and the second microchannel 5 are located on opposite sides of the substrate 25 an intersection edge 15 is formed at the intersection area 6.

The first microchannel 3 is limited by a first channel wall 7 and the second microchannel 5 is limited by a second channel wall 9. For a proper function of the non-closing valve 1 it is necessary, that the first microchannel 3 and the second microchannel 5 overlap each other, and that the sum of the respective heights h₁ and h₂ of the first microchannel 3 and the second microchannel 5 exceed the thickness d of the substrate 25. The cross section of the first microchannel 3 is labelled with reference numeral 16. Although the first microchannel 3 and the second microchannel 5 according the embodiment given in figure 1 are aligned to each other said channels may be arranged to cross each other in crossing angles between 0° (seen in figure 1) up to 90°. In figure 1 an alignment of the first microchannel 3 and the second microchannel 5 within a 180°-configuration is shown, however, the first microchannel 3 and the second microchannel 5 may be arranged in various angles with respect to each other while overlapping.

The lines in figure 1 marked with A-A, B-B and C-C are section lines, which illustrate where the section views in figures 2 to 4 have been taken.

Figure 2 shows a sectional view of an inventive non-closing valve along the line which is marked A-A in figure 1.

To form a non-closing valve 1 the first microchannel 3 and the second microchannel 5 are incorporated into the substrate 25 on opposite sides. To achieve the intersection area 6 with the intersection edge 15 the sum of the heights h₁ and h₂ of the microchannels 3, 5 must exceed the thickness d of the substrate 25. The first microchannel 3 and the second microchannel 5 are limited by the first channel wall 7 and the second wall channel wall 9, . respectively. At the intersection area the first microchannel 3 ends in the first border 11 and the second microchannel 5 ends in the second border 13. The first microchannel 3 is surrounded by the first channel wall 7 and a first cover wall 19 of a first cover 17. The second microchannel 5 is surrounded by the second channel wall 9 and a second cover wall 23 which belongs to a second cover 21. For this purpose, the first cover 17 and the second cover 21 are located on either side of the substrate 25. The arrows marked with reference number 26 show a possible flow direction for the liquid through the non-closing valve 1.

Although the microchannels 3, 5, respectively are covered by plate- shaped cover member 17, 21, respectively, said microchannels 3, 5 respectively may lack the covers and could be operated as microchannels 3, 5, respectively remaining open. According to this alternative solution the open microchannels 3, 5, respectively, are manufactured, using manufacturing methods such as wet etching or plasma etching. One manufacturing method of microchannels 3, 5 in a substrate 25 etchable in this alternative is wet-etching for example of metal foils.

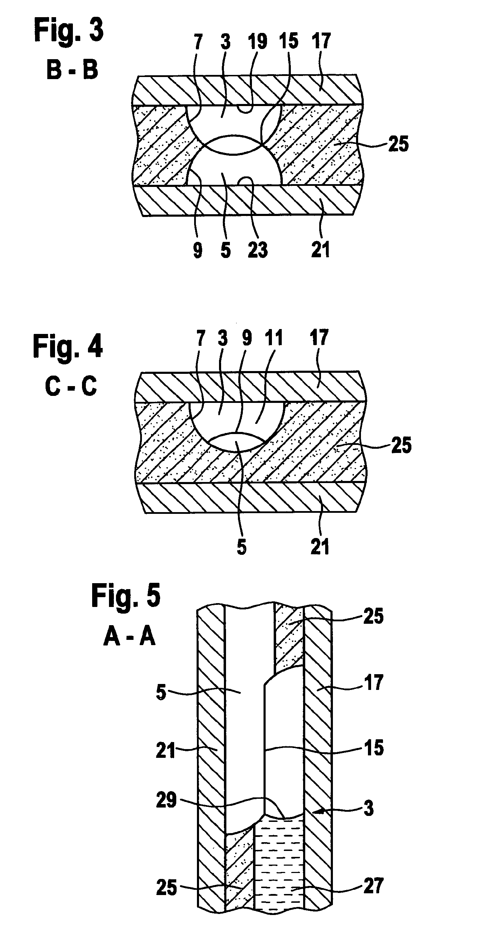

Figure 3 shows a sectional view of a non-closing valve according to the present invention along the line which is marked B-B in figure 1.

In the embodiment shown in figure 3 the first microchannel 3 and the second microchannel 5 are of semi-circular shape. Within this embodiment the diameter of the first microchannel 3 and the second microchannel 5 are the same. The first microchannel 3 and the second microchannel 5 are formed within the substrate 25 on opposite sides and closed with the first cover 17 and the second cover 21, respectively. The cross-section of the first microchannel 3 is formed by the first channel wall 7 and the first cover wall 19, the cross-section of the second microchannel 5 is formed by the second channel 9 and the second cover wall 23.

The intersection edge 15 formed by the first microchannel 3 and the second microchannel 5 is sharp-edged. The intersection edge 15 stops liquid flow. Furthermore, depending on the properties of the liquid and on the properties of the material of the walls 7, 9, 19 and 23 surrounding the microchannels 3, 5, the liquid forms a concave meniscus. The interface of the wall of the microchannel and the liquid has a contact angle < 90° to allow a liquid flow within the microchannels 3, 5, respectively driven by capillary forces. For some reasons it might be desirable, that a cover member 17, 21 of the microchannels 3, 5 may have a contact angle > 90°. Due to the contact angle of < 90° of the interface of microchannel wall and the liquid, a liquid-flow is achieved without application of external energy, for instance via an extra pumping-element. For creating certain contact angles for microchannel/liquid it may be advisable, to provide for a coating of the respective walls of the microchannels 3, 5, respectively either by physical methods or chemical methods.

The sectional view shown in figure 4 is located in flow direction in front of the sectional view shown in figure 3. Through the first microchannel 3 the first border 11 where the first microchannel 3 ends can be seen. Also a part of the second microchannel 5 is shown, through which the liquid continues to flow when the liquid pressure is high enough to create a continuous flow through the non-closing valve 1. As is shown in figure 4 the first cover 17 and the second cover 21 may cover the entire substrate 25.

Figure 5 shows the same sectional view as given in figure 2 but with liquid 27 within the first microchannel 3. The liquid 27 stops at the beginning of the intersection edge 15 because of the geometry of the intersection. Depending on the properties of the liquid and the properties of the surface material of the channel walls 7, 9, 19, 23 the liquid forms a concave meniscus 29.

If the internal pressure of the liquid exceeds a certain value imposed by the geometry of the non-closing valve 1 (for example by application of pressure by means of an external pump) the liquid continuous to flow.

Besides the embodiment shown in figures 1 to 5 with similar diameter of the first microchannel 3 and the second microchannel 5 it is also envisaged that the diameters are not identical. It is important, however, that if the diameters of the first microchannel 3 and the second microchannel 5 are not the same, that the diameter of the first microchannel 3 through which the liquid enters is smaller as compared to the diameter of the second microchannel 5 through which the liquid leaves.

Further, besides the semi-circular shape the microchannels 3, 5 may also be of triangular, trapezoidal, or square shaped. If the first microchannel 3 and the second microchannel 5 are of a square shape, it is necessary that the cross-section 16 of the second microchannel 5 through which the liquid leaves exceeds the cross-section 16 of the first microchannel 3 through which the liquid enters to form a sharp intersection edge 15.

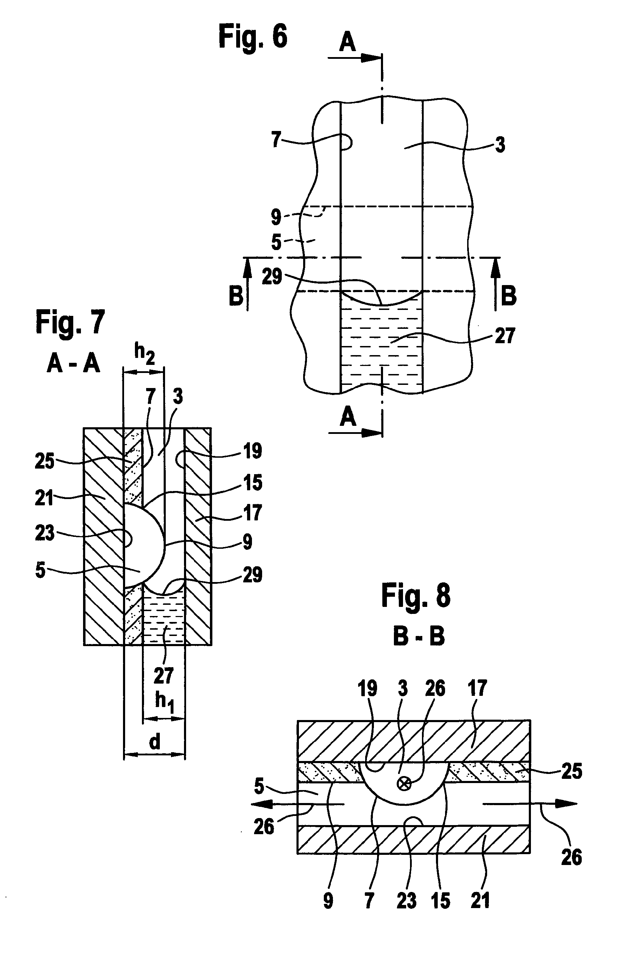

A second embodiment of the non-closing valve according to the present invention is shown in figure 6.

In a second embodiment as shown in figure 6 the first microchannel 3 and the second microchannel 5 fabricated on either side of the substrate 25 cross each other at an angle α which has in this embodiment 90 degrees. Of course the intersecting angle between said first microchannel 3 and said second microchannel 5 may adopt any angle in between the range of 0° and 90° (wide angle). At the intersection area an intersection edge 15 is formed where the flow of liquid 27 comes to a stop because of its inherent properties and the flow resistance depending on the friction of the liquid 27 at the channel walls 7, 9, 19, 21 limiting the microchannels 3, 5. The meniscus 29 formed at the intersection edge 15 is concave depending on the contact angle which depends on the material properties of the channel walls 7, 9, 19, 23, respectively. The interface of the surface material of the microchannels 3, 5 and the liquid 27 has a contact angle < 90° to allow for liquid transfer by capillary forces. However, an extra cover member 17, 21 may have with respect to the liquid 27 to be transferred, a contact angle, either > 90° or < 90°. As long as the respective contact angle between of the interface of the walls of the microchannels 3, 5 with respect to the liquid 27 to be transferred, is less than 90°, a liquid transfer by capillary forces is assured.

The section lines marked A-A and B-B indicates where the sectional views in figure 7 and figure 8, respectively are taken.

Figure 7 shows a sectional view of the embodiment as shown in figure 6 along the line marked A-A.

Since the first microchannel 3 and the second microchannel 5 form a sharp intersection edge 15 the liquid 27 comes to a stop at the intersection edge 15 because of the geometry of the intersection edge 15. If the internal pressure of the liquid exceeds a certain value imposed by the geometry of the non-closing valve 1, the liquid continuous to flow. Therefore, one advantage of two crossing microchannels 3, 5 is that the liquid 27 will be distributed into three microchannels 3, 5. The non-closing valve 1 may also be overrun by the liquid 27 at the non-closing valve 1.

The first microchannel 3 and the second microchannel 5 are formed within the substrate 25, preferably by manufacturing methods as wet etching of metal foils, plasma etching or wet etching of glass. But also any other micromachining method can be used which allows to create microchannels with approximately semi-circular, rectangular, or trapezoidal cross-sections 16. Microchannels 3, 5 fabricated along one of the previously mentioned manufacturing methods are may be closed with the covers 17, 19, respectively. The covers 17, 19 may not be limited to the microchannels 3, 5, but may also cover the whole side of the substrate 25. Using the covers 17, 21 the microchannels 3, 5 are closed on each side by the channel wall 7, 9 and the cover wall 19, 23.

The sectional view along the line marked B-B of the embodiment shown in figure 6 is shown in figure 8.

Figure 8 shows that the sectional view along the line B-B is similar to the sectional view along the line A-A. The liquid 27, as shown in figure 6, flows in the illustration in figure 8 into the plane of projection. As soon as the force induced by pressure in the liquid 27 exceeds a certain value imposed by the geometry of the intersection, the liquid 27 continues to flow within the microchannels 3, 5 in the flow directions 26, identified with arrows.

Besides the embodiments shown in figures 6 to 8 with orthogonally crossing microchannels 3, 5 the microchannels 3, 5 may cross each other in any angle α between 0 and 90 degrees. Also the microchannels 3, 5 may have different diameters. The sum of the channel heights h₁, h₂ of the microchannels 3, 5 exceeds the thickness d of the substrate 25.

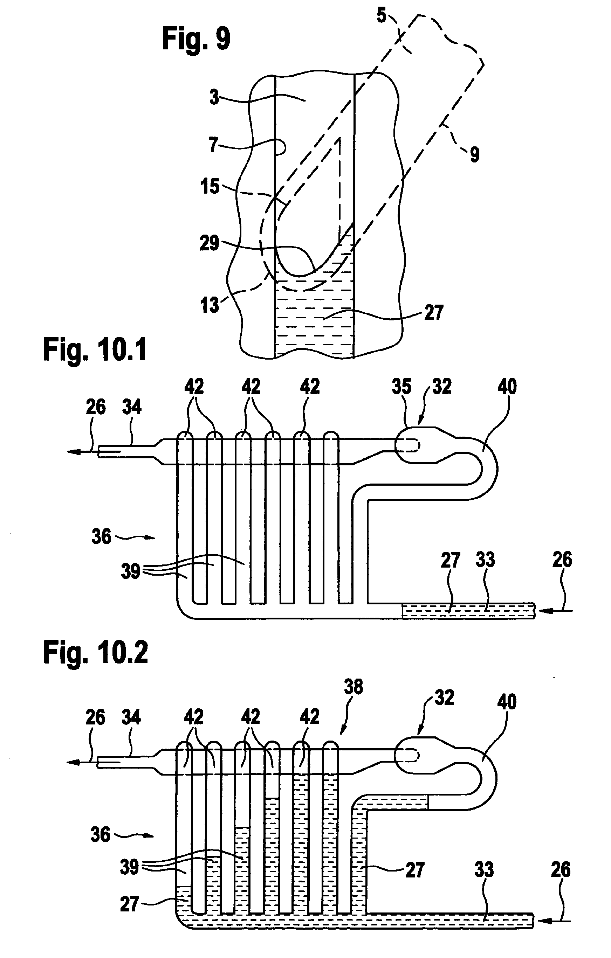

Figure 9 shows a further embodiment of the non-closing valve according to the present invention.

In the embodiment shown in figure 9 the second microchannel 5 intersects the first microchannel 3 at any desired angle α. Contrary to the embodiments shown in figures 6 to 8, respectively, the second microchannel 5 ends at the intersection area forming the border 13. The liquid 27 stops at the intersection edge 15 because of the geometry of the intersection. As soon as a predetermined pressure is applied to the liquid 27 to be transferred within the microchannels 3, 5, respectively, the liquid 27 overruns the non-closing valve 1. Like the embodiments shown previously, the microchannels 3, 5 are formed on either side of the substrate 25. The microchannels 3, 5, respectively may have different diameters, the sum of the heights h₁, h₂ exceeds the thickness d of the substrate 25.

Within the embodiment with two crossing microchannels 3, 5 at any angle α which exceeds 0 degrees it is envisaged that the microchannels 3, 5 may also be of triangular, trapezoidal or square shape. The shape of the microchannels 3, 5, respectively may be chosen in view of the properties of the liquid 27 to be conveyed in the microchannels 3, 5, respectively.

To improve the function of the non-closing valves, the microchannel walls 7, 9 and the cover walls 19, 23 may have different surface properties. The microchannels 3, 5, respectively may be manufactured on a planar substrate 25 which may be a steel foil of a thickness between 25 µm and 1000 µm. An alternative material is polyimide-foils, having a thickness between 10 µm and 1000 µm, as well as LCB-foils of a thickness between 10 µm and 1000 µm. Further etchable materials are glass, pyrex® of a thickness between 100 µm and 1000 µm. also silicium-substrates are envisaged to be used, which have a thickness between 10 µm and 2000 µm. Further all plastic material can be used which has a plane surface which can be edged by at least on of the previous listed manufacturing methods. Thus, the walls 7, 9, 19, 23 may be adapted concerning their properties vis a vis the liquid 27 which is to be conveyed. It is envisaged too, that at least one of the walls 7, 9, 19, 23 is hydrophilic and the other walls 7, 9, 19, 23 are hydrophobic.

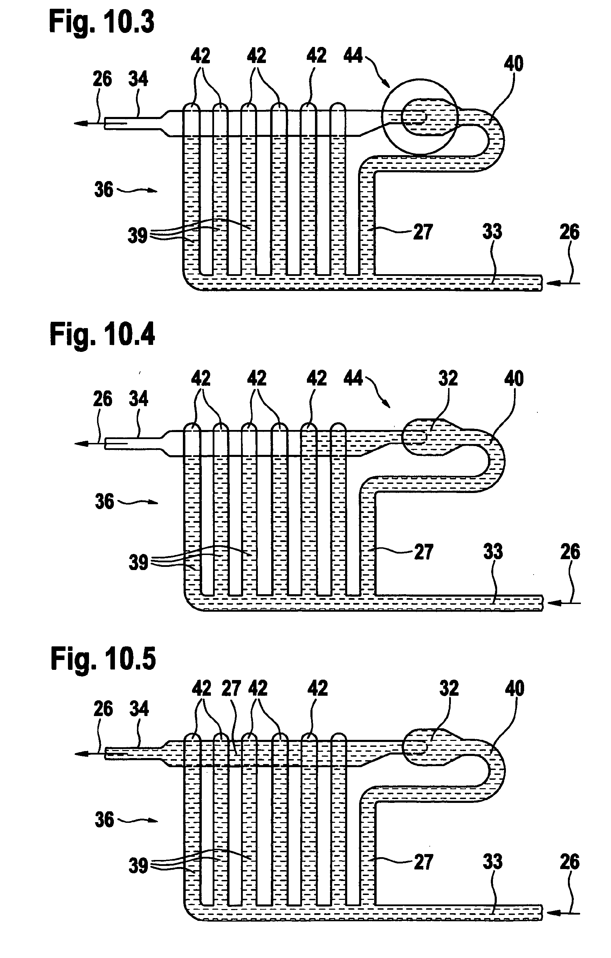

The figure sequence of figures 10.1 to 10.5 shows different stages of a liquid flow through a time triggered flow splitter microfluidic device.

Figure 10.1 depicts liquid 27 entering via an inlet channel 33 (liquid in) into the time triggered flow splitter microfluidic device 36. In the stage of the flow of the liquid 27 a plurality 39 of splitted channels on the front side of the time triggered flow splitter device 36 is still inactive. A widened area 35 of a branched-off inlet channel 40 is still empty, i.e. there is no liquid branched-off from the inlet channel 33 (liquid in) present.

In figure 10.2 liquid 27 being fed to the time triggered flow splitter microfluidic device 36 has partially reached the branched-off inlet channel 40 as well as some of the channels of the plurality 39 of splitted channels on the front side of the time triggered flow splitter microfluidic device 36. The liquid 27 having penetrated to the splitted channels of the plurality 39 of splitted channels, stops at position 43, i.e. at the non-closing valve 1 interconnecting the ends of each channel of the plurality 39 of splitted channel with a common outlet channel 34 (liquid out). The common outlet channel 34 is arranged on the respective other side of the time triggered flow splitter microfluidic device 36. The liquid 27 has partially flown through the branched-off inlet channel 40 towards an opening 32, but has not yet reached the opening 32. The common outlet channel 34 (liquid out) is arranged on the backside as a backside channel 38 of the substrate 25 of the time triggered flow splitter microfluidic device 36.

Figure 10.3 shows the liquid 27 having penetrated all of the channels of the plurality of channels of the time triggered flow splitter microfluidic device 36 and having penetrated a respective feed-through area, given by opening 32. According to the stage of the liquid flow, all of the splitted channels of the plurality 39 of splitted channels are filled with liquid 27. Further, liquid 27 has entirely flown through the branched-off inlet channel 40 and has penetrated the opening 32 of the branched-off inlet channel 40, i.e. has reached the respective backside of the substrate 25 of the time triggered flow splitter microfluidic device 36. However, in this stage, a plurality 39 of non-closing valves 42 is still active. Thus, no liquid flow 26 from the plurality 39 of each of the splitted microchannels has started yet into the underlying outlet channel 34 (liquid out) of the time triggered flow splitter microfluidic device 36.

According to the stage of liquid flow given in figure 10.4 the liquid 27 has penetrated the opening 32 and has partially reached the common outlet channel 34 (liquid out) on the backside of the time triggered flow splitter microfluidic device 36. The liquid 27 has overrun (reference numeral 44) the plurality 42 of non-closing valves 1 being arranged between the respective ends of each of the plurality 39 of microchannels arranged on the front side of the substrate 25. Thus, a flow of liquid 27 in flow direction 26 through the opening of the respective outlet channel 34 (liquid out) by capillary forces only is created. By means of the fully penetrated opening 32 connecting the branched-off inlet channel 40 with the common outlet channel 34 (liquid out) on the respective backside of the substrate 25, the non-closing valves 1 at the end of the plurality of microchannels 39 are overrun, thus starting fluid flow into liquid flow direction 26.

According to the stage given in figure 10.5, the liquid flow 26 out of all of the microchannels of the plurality 39 of microchannels of the time triggered flow splitter microfluidic device 36 has begun. Since the opening 32 in the branched-off inlet channel 40 is active, a continuous flow of liquid 27 through each of the microchannels on the front side of the substrate 25 has been initiated. The front side of the time triggered flow microfluidic device 36 is connected to the backside on which the backside microchannels 38 are arranged, thus allowing liquid flow 26 from the front side to the respective back side of the time triggered flow splitter microfluidic device 36. If, however, the common outlet channel 34 (liquid out) has sufficient hydrophilic properties which can be improved by corresponding coating, the liquid 27 may be drawn into it without a seal as shown in figure 10.2.

The opening 32 connecting the respective front side and the respective backside of the substrate 25 of a time triggered flow splitter microfluidic device 36 allows for a larger freedom of design to create more complex capillary force driven microfluidic networks such as the example given by the time triggered flow splitter microfluidic device 36 according to figures 10.1 to 10.5, respectively. By means of the opening 32 particularly comprising a microchannel having a widened portion 35 acting a trigger element for a flow 26 of liquid 27 is achieved allowing to overrun non-closing valves 1 and to create a continuous liquid flow 26.

The geometric non-closing valves 1 according to the present invention may be used in microfluidic devices for processing human blood, liquor or other body fluid samples, aqueous solutions of reagents, liquids containing organic solutions or oil.

### List of reference numbers

- 1: Non-closing valve
- 3: First microchannel
- 5: Second microchannel
- 6: overlapping area
- 7: First channel wall
- 9: Second channel wall
- 11: Border of first microchannel 3
- 13: Border of second microchannel 5
- 15: Intersection edge
- 16: Cross-section
- 17: First cover
- 19: First cover wall
- 21: Second cover
- 23: Second cover wall
- 25: Substrate
- 26: Flow direction
- 27: Liquid
- 29: Meniscus
- 31: Liquid reservoir
- d: Thickness of the substrate 25
- h₁: Height of the first microchannel 3
- h₂: Height of the second microchannel 5
- α: Angle
- 32: opening
- 33: inlet channel
- 34: outlet channel
- 35: widened area
- 36: time triggered flow splitter microfluidic device
- 37: front side channels
- 38: backside channels
- 39: splitted channels (front side)
- 40: trigger channel
- 41: channel length
- 42: plurality of non-closing valves 1
- 43: liquid stop
- 44: liquid overrun

## Claims

1. Substrate having at least two microchannels (3, 5) of which at least one microchannel (3, 5) is formed on one side of the substrate (25) and at least one microchannel (3, 5) is formed on the opposite side of the substrate (25), said microchannels (3, 5) on either side of the substrate (25) forming an overlapping area (6) with an edge portion (15) acting as a geometrical non-closing valve (1).

2. Substrate according to claim 1, **characterized in that** the microchannels (3, 5) have a cross-section (16) which is either approximately semi-circular, triangular, trapezoidal or rectangular shaped.

3. Substrate according to claim 1, **characterized in that** the overlapping area (6) is formed by overlapping of the two microchannels (3, 5) positioned on either side of the substrate (25) whereby the microchannels (3, 5) are aligned.

4. Substrate according to claim 1, **characterized in that** the overlapping area (6) is formed by crossing of the two microchannels (3, 5) positioned on either side of the substrate (25).

5. Substrate according to claim 1, **characterized in that** the overlapping area (6) is formed by intersecting of the microchannels (3, 5) positioned on either side of the substrate (25).

6. Substrate according to claim 1, **characterized in that** the sum of heights (h₁, h₂) of the microchannels (3, 5) exceeds the thickness (d) of the substrate (25).

7. Substrate according to claim 1, **characterized in that** the microchannels (3, 5) are fabricated by plasma etching or by wet-etching technics.

8. Substrate according to claim 1, **characterized in that** the substrate (25) is a thin polymeric foil having a thickness within the range between 10 µm and 1000 µm.

9. Substrate according to claim 1, **characterized in that** the substrate (25) is a metal foil having a thickness preferably within the range of 25 µm and 1000 µm.

10. Substrate according to claim 1, **characterized in that** the substrate (25) has a plane and etchable surface.

11. Substrate according to claim 1, **characterized in that** the microchannels (3, 5) are closed by cover-members (17, 19).

12. Substrate according to claim 10, **characterized in that** the first microchannel (3) is limited by a first channel wall (7) and a first cover wall (19) and the second microchannel (5) is limited by a second channel wall (9) and a second cover wall (23).

13. Substrate according to claim 1, **characterized in that** the material of the walls (7, 9, 19, 23) of the microchannels (3, 5) impose a contact angle of ≤ 90° to the liquid (27) to be transferred.

14. Substrate according to claim 1, **characterized in that** the material of the walls (7, 9, 19, 23) of the microchannels (3, 5) impose a contact angle ≤ 90° to the liquid (27) to be transferred and the materials of cover members (17, 21) impose a contact angle of > 90° to the liquid (27) to be transferred.

15. Substrate according to claim 11, **characterized in that** the cover-members (17, 19) have surface properties allowing for a contact angle > 90°.

16. Substrate according to claim 3, **characterized in that** within the overlapping area (6) the microchannels (3, 5) create liquid conveying channels.

17. Substrate according to claim 4, **characterized in that** by a crossing arrangement of the microchannels (3, 5), respectively at any angle between 0° and 90°, four fluid conveying channels are created.

18. Substrate according to claim 5, **characterized in that** by intersecting of the microchannels (3, 5) liquid-conveying channels are created.
